# EUROPEAN PATENT APPLICATION

(11) **EP 4 641 760 A1**
(43) Date of publication of application: **29.10.2025**
(21) Application number: 24215469.8
(22) Date of filing: 26.11.2024
(51) Int. Cl.: H01M 10/613, H01M 10/643, H01M 10/651, H01M 10/6556, H01M 50/213

(54) **BATTERY PACK**

(30) Priority: 25.04.2024 CN 202420880680 U
(71) Applicant: CALB Group Co., Ltd., Changzhou City, Jiangsu Province (CN)
(72) Inventor: YANG, Xulong, Changzhou City, Jiangsu Province (CN); WANG, Shuaifeng, Luoyang City, Henan Province (CN); LI, Ran, Changzhou City, Jiangsu Province (CN); JIANG, Hao, Changzhou City, Jiangsu Province (CN)
(74) Representative: Becker, Eberhard

(57) **Abstract**

A battery pack includes a battery box (100), a cylindrical battery (200) disposed in the battery box (100), a cooling plate (300) and a heating film (400). The cylindrical battery (200) has first and second end faces (210, 220), and an outer circumferential face connected therbetween. The cooling plate (300) has a first surface (310) facing towards the first end face (210); a heating film (400) is disposed on the first surface (310) and between the cooling plate (300) and the first end face (210); the heating film (400) has a penetrating structure (410). The front projection pattern of the first end face (210) partially overlaps the front projection pattern of the penetrating structure (410) on a reference plane parallel to the first surface (310). The penetrating structure (410) is adapted for heat-conducting connection of the first end face (210) to the cooling plate (300).

## Description

### BACKGROUND

### Technical Field

The present invention relates to the technical field of batteries, and particularly relates to a battery pack.

### Description of Related Art

In the prior design of the battery pack, part of the battery packs adopt a design in which the end face of the cylindrical battery is in contact with the cooling plate for heat exchange, i.e., the cooling plate has a heat exchange surface facing towards the end face of the cylindrical battery. Also, the heat exchange surface of the cooling plate is covered with a heating film, thereby heating the cylindrical battery. However, due to the provision of the heating film, the heat transfer effect between the cylindrical battery and the cooling plate is poor, affecting the cooling effect of the cooling plate.

### SUMMARY

A main object of the present invention is to overcome at least one of the above-mentioned disadvantages of the prior art and provide a battery pack having high heat transfer efficiency between a cooling plate and a cylindrical battery.

In order to achieve the above purpose, the present invention adopts the following technical solution.

According to an aspect of the present invention, a battery pack is provided, including a battery box, a cylindrical battery, a cooling plate and a heating film; the cylindrical battery is disposed in the battery box, and has an axial direction being a first direction; the cylindrical battery has a first end face, a second end face and an outer circumferential face; the first end face and the second end face are arranged at intervals in the first direction; the outer circumferential face is connected between the first end face and the second end face; the cooling plate has a first surface facing towards the first end face; a heating film is disposed on the first surface and located between the cooling plate and the first end face; the heating film has a penetrating structure penetrating in the thickness direction; wherein the front projection pattern of the first end face at least partially overlaps with the front projection pattern of the penetrating structure on a reference plane parallel to the first surface; and the penetrating structure is adapted for heat-conducting connection of the first end face to the cooling plate.

From the above technical solution, it can be seen that the advantages and positive effects of the battery pack proposed by the present invention are as follows.

The battery pack proposed by the present invention adopts a design in which the first surface of the heating film faces towards the first end face of the cylindrical battery; the first surface of the cooling plate is provided with a heating film, and the heating film is located between the cooling plate and the first end face and is provided with a penetrating structure penetrating in a thickness direction; the front projection pattern of the first end face at least partially overlaps with the front projection pattern of the penetrating structure on a reference plane parallel to the first surface; and the penetrating structure is adapted for heat-conducting connection of the first end face to the cooling plate. By the above-mentioned structural design, the present invention can reduce the influence of the heating film on the heat transfer between the cooling plate and the cylindrical battery by using the penetrating structure, and can realize the direct heat transfer between the cooling plate and the cylindrical battery via the penetrating structure, so as to improve the heat transfer efficiency and optimize the thermal performance of the battery pack.

### BRIEF DESCRIPTION OF THE DRAWINGS

Various objects, features and advantages of the present invention will become more apparent by considering the following detailed description of preferred embodiments of the present invention in conjunction with the accompanying drawings. The drawings are merely exemplary illustrations of the present invention and are not necessarily drawn to scale. In the drawings, like reference numerals refer to the same or similar parts throughout the several views. In the drawings,
FIG. 1 is a structurally perspective view showing a battery pack according to an exemplary embodiment;
FIG. 2 is a schematic enlarged view of a portion A in FIG. 1;
FIG. 3 is a structurally perspective view of a partial structure of the battery pack shown in FIG. 1; and
FIG. 4 is a perspective exploded view of FIG. 3;
FIG. 5 is a schematic diagram of a front projection of a penetrating structure shown in FIG. 4 with a first end face of a cylindrical battery on a reference plane;
FIG. 6 is a schematic plan view of a heating film shown in FIG. 4; and
FIG. 7 is a schematic partial cross-sectional view of FIG. 3.

### Description of Reference Numerals:

100, battery box;
110, bottom plate;
1101, module bottom plate;
200, cylindrical battery;
201, battery column;
202, assembled battery;
210, first end face;
220, second end face
230, explosion proof valve;
300, cooling plate;
310, first surface
400, heating film;
410, penetrating structure;
500, conductive bar;
610, first adhesive layer;
620, second adhesive layer;
D, distacne;
O, center;
X, first direction;
Y, second direction;
Z, third direction.

### DESCRIPTION OF THE EMBODIMENTS

Typical examples embodying the features and advantages of the present invention will be described in detail in the following description. It should be understood that the present invention can have various modifications in different examples without departing from the scope of the present invention, and that the description and the drawings are intended for illustrative purposes in nature and are not intended to limit the present invention.

In the following description of different exemplary embodiments of the present invention, reference is made to the accompanying drawings, which form a part of the present invention, and in which different exemplary structures, systems, and steps that may implement aspects of the present invention are shown by way of example. It should be understood that other specific aspects of components, structures, exemplary devices, systems, and steps may be used, and structural and functional modifications may be made without departing from the scope of the present invention. Moreover, while the terms "over", "between", "within", and the like may be used in this description to describe various exemplary features and elements of the present invention, these terms are used herein for convenience only, e.g., in accordance with the direction of the examples described in the figures. Nothing in this description should be understood as requiring a specific three-dimensional direction of the structure to fall within the scope of the present invention.

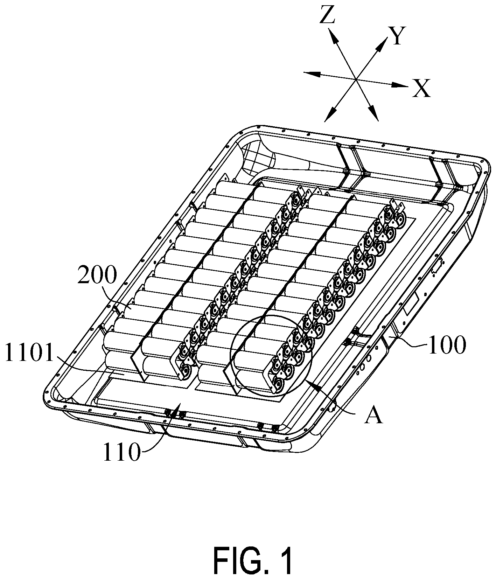

Referring to FIG. 1, there is representatively shown a schematic perspective view of a battery pack according to the present invention. In this exemplary embodiment, the battery pack proposed by the present invention is described by taking a battery applied to a vehicle as an example. It will be readily understood by those skilled in the art that in order to apply the relevant design of the present invention to other types of battery devices, various modifications, additions, substitutions, deletions or other changes to the following specific embodiments are still within the scope of the principles of the battery pack proposed by the present invention.

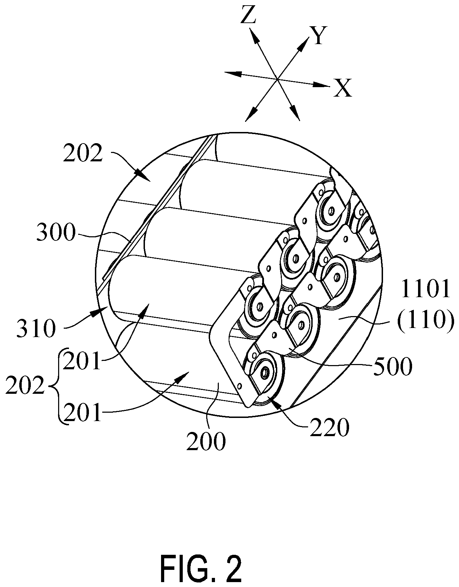

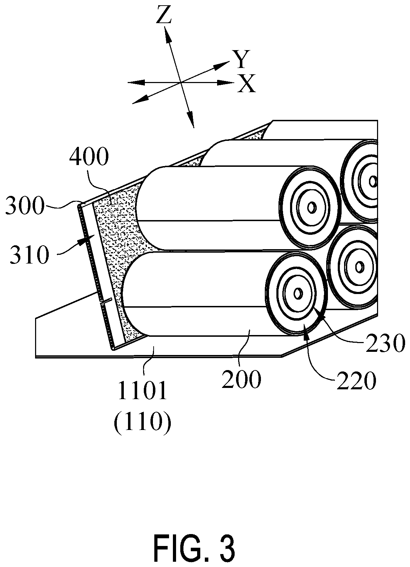

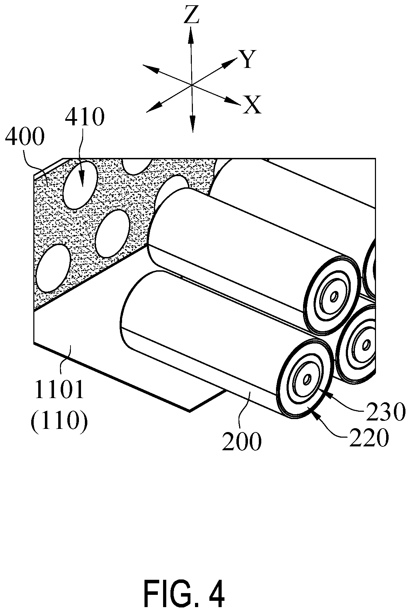

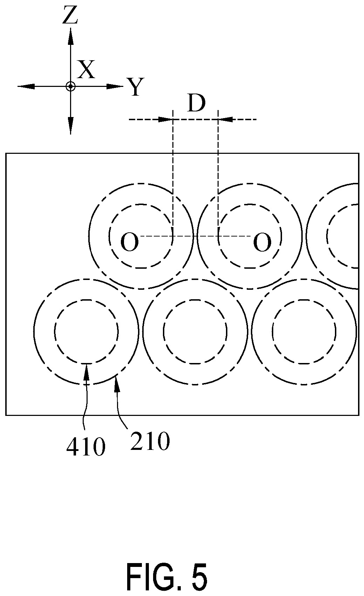

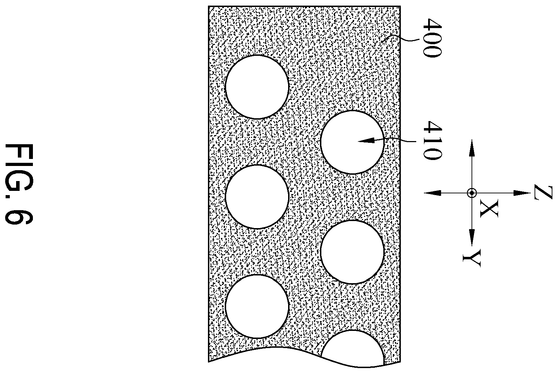

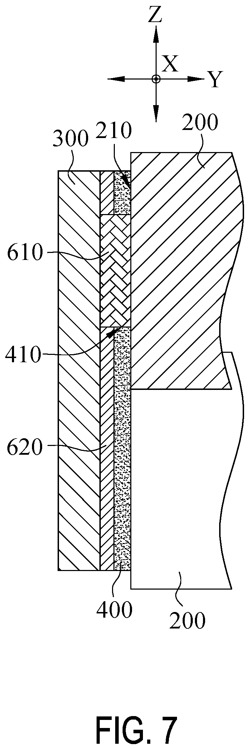

As shown in FIG. 1, in an embodiment of the present invention, the battery pack proposed by the present invention includes a battery box 100, a cylindrical battery 200, a cooling plate 300 and a heating film 400. Referring to FIG. 2 to FIG. 7, FIG. 2 representatively shows a schematic enlarged view of a portion A in FIG. 1. FIG. 3 representatively shows a schematic perspective view of a partial structure of a battery pack, in which a combined structure of a bottom plate 110, a cooling plate 300, a heating film 400, and a partial cylindrical battery 200 is specifically shown; FIG. 4 representatively shows a perspective exploded view of FIG. 3; FIG. 5 representatively shows a schematic diagram of a front projection of a penetrating structure shown in FIG. 4 with a first end face of a cylindrical battery on a reference plane; FIG. 6 representatively shows a schematic plan view of a heating film shown in FIG. 4; and FIG. 7 representatively shows a schematic partial cross-sectional view of FIG. 3. Hereinafter, the structure, connection mode and functional relationship of each main component of the battery pack proposed by the present invention will be described in detail in conjunction with the above drawings.

As shown in FIG. 1 to FIG. 6, in an embodiment of the present invention, a cylindrical battery 200 is disposed in a battery box 100. The cylindrical battery 200 has a first end face 210, a second end face 220 and an outer circumferential face. The first end face 210 and the second end face 220 are arranged at intervals in a first direction X, and the first direction X is the axial direction of the cylindrical battery 200. The outer circumferential face is connected between the first end face 210 and the second end face 220. The cooling plate 300 has a first surface 310 facing towards the first end face 210, i.e., the cooling plate 300 just faces towards the first end face 210 of the cylindrical battery 200 with its first surface 310, which may be parallel to the first end face 210. Here, the cooling plate 300 is in contact and heat exchange with the first end face 210 of the cylindrical battery 200 (may be in direct contact or may be in indirect contact via other structures, such as a first adhesive layer 610). The heating film 400 is disposed on the first surface 310 of the cooling plate 300 and between the cooling plate 300 and the first end face 210 of the cylindrical battery 200, and has a penetrating structure 410 penetrating through the heating film 400 in the thickness direction (e.g., the first direction X) of the heating film 400. On this basis, on a reference plane parallel to the first surface 310, the front projection pattern of the first end face 210 at least partially overlaps with the front projection pattern of the penetrating structure 410 adapted for heat-conducting connection of the first end face 210 of the cylindrical battery 200 with the cooling plate 300. By the above-mentioned structural design, the present invention can reduce the influence of the heating film 400 on the heat transfer between the cooling plate 300 and the cylindrical battery 200 by using the penetrating structure 410, and can realize the direct heat transfer between the cooling plate 300 and the cylindrical battery 200 via the penetrating structure 410, so as to improve the heat transfer efficiency and optimize the thermal performance of the battery pack.

As shown in FIG. 6, in an embodiment of the present invention, the heating film 400 is provided with at least two penetrating structures 410. The front projection pattern of each penetrating structure 410 at least partially overlaps with the front projection pattern of the first end face 210 of only one of the cylindrical batteries 200 on the above-mentioned reference plane. By means of the above-mentioned structural design, the present invention is suitable for increasing the bonding and positioning effect between the cylindrical batteries 200 and the cooling plate 300 by means of gluing at a fixed point in the penetrating structure 410 so as to strengthen the limiting and fixation between each cylindrical battery 200.

As shown in FIG. 5, based on the structural design that the heating film 400 is provided with at least two penetrating structures 410, in an embodiment of the present invention, the ratio of the area of the front projection pattern of the penetrating structure 410 to the area of the front projection pattern of the first end face 210 of the cylindrical battery 200 may be 0.047-0.253, such as 0.047, 0.075, 0.1, 0.2, 0.253, etc. With the above-mentioned structural design, since the heat transfer efficiency of the cylindrical battery 200 in the axial direction is much greater than that in the radial direction, it is necessary to have a region on the first end face 210 of the cylindrical battery 200 attached to the heating film 400, i.e., the area of the penetrating structure 410 is less than that of the first end face 210, thereby improving the heat transfer efficiency of the cylindrical battery 200 in the radial direction thereof.

In an embodiment of the present invention, the area of the front projection pattern of the penetrating structure 410 may be 78 mm²-420 mm², for example, 78 mm², 100 mm², 150 mm², 300 mm², 420 mm², etc.

As shown in FIG. 5, based on the structural design of the above-mentioned area relationship between the penetrating structure 410 and the front projection pattern of the first end face 210, in an embodiment of the present invention, on the above-mentioned reference plane, the geometric center of the front projection pattern of the first end face 210 may coincide with the geometric center of the front projection pattern of the penetrating structure 410. Taking the case where both the first end face 210 and the front projection pattern of the penetrating structure 410 are circular, the geometric center described above can be understood as the center O of the corresponding circle of the front projection pattern. By means of the above-mentioned structural design, the present invention can ensure that the radial dimension of the heat conduction connection between the cylindrical battery 200 and the heating film 400 is consistent at all points in the circumference, so that the heat transfer effect of the cylindrical battery 200 in the radial direction is more uniform, which is beneficial to the heat balance of the single battery.

As shown in FIG. 6, based on the structural design that the heating film 400 is provided with at least two penetrating structures 410, in an embodiment of the present invention, the distance D between the two can be 20 mm-48 mm, such as 20 mm, 25 mm, 30 mm, 40 mm, 48 mm, etc., for any two adjacent penetrating structures 410 on the heating film 400. It should be noted that the distance D between the two penetrating structures 410 may be a connecting line between the geometric centers (e.g., the center O) of the front projection patterns of the two penetrating structures 410 on the reference plane. The length of a portion of the connecting line outside the contour of the two front projection patterns is the distance D. By means of the above-mentioned structural design, the present invention can be applied to a spatial arrangement form in which the cylindrical batteries 200 are arranged relatively compact, which is beneficial to improve the utilization rate of space, and also can avoid that the distance of the penetrating structures 410 is too small, so that the heating core body is more likely to be subject to force damage and failure. In some embodiments, the distance D between two adjacent penetrating structures 410 may also be less than 20 mm, or may be greater than 48 mm, such as 19.5 mm, 49 mm, etc., which is not limited in this embodiment.

As shown in FIG. 6, in an embodiment of the present invention, on the above-mentioned reference plane, the proportion of the area of the front projection pattern of the penetrating structure 410 in the area of the front projection pattern of the heating film 400 may be 5%-20%, for example, 5%, 7%, 10%, 15%, 20%, etc. Note that the area of the front projection pattern of the heating film 400 described above refers to the area of the pattern surrounded by the outer contour of the front projection pattern of the heating film 400, i.e., the area includes an area of the front projection pattern of the penetrating structure 410. By the above-mentioned structural design, the present invention can avoid that the area ratio of the penetrating structure 410 is too large. Since the thickness of the heating film 400 itself is relatively thin, the area ratio of the penetrating structure 410 is too large, which result in poor strength of the heating film 400 which may be more easily damaged during the assembly process. Meanwhile, the present invention can avoid the area ratio of the penetrating structure 410 being too small, thereby ensuring the effect of enhancing heat transfer and fixing. In some embodiments, the proportion of the penetrating structure 410 in the area of the front projection pattern of the heating film 400 may also be less than 5%, or may be greater than 20%, e.g., 4.9%, 21%, etc., which is not limited in the embodiment.

As shown in FIG. 7, in an embodiment of the present invention, the battery pack proposed by the present invention may further include a heat-conducting member which is at least partially disposed in the penetrating structure 410. Accordingly, the first end face 210 of the cylindrical battery 200 is in heat-conducting connection with the cooling plate 300 via the heat-conducting member.

As shown in FIG. 7, in an embodiment of the present invention, the heat-conducting member may include a first adhesive layer 610, at least a portion of which is adapted to bond the cylindrical battery 200 and the cooling plate 300. By the above-mentioned structural design, the present invention can use the first adhesive layer 610 to achieve the fixed connection between the cylindrical battery 200 and the cooling plate 300. Further, the first adhesive layer 610 may employ a heat-conductive structural adhesive, thereby allowing both the fixed positioning of the cylindrical battery 200 and the cooling plate 300 and the heat transfer performance between the cylindrical battery 200 and the cooling plate 300.

As shown in FIG. 7, based on the structural design in which the first adhesive layer 610 is disposed in the penetrating structure 410, in an embodiment of the present invention, at least a portion of the first adhesive layer 610 is adapted to simultaneously bond the cylindrical battery 200, the cooling plate 300 and the heating film 400. For example, the first adhesive layer 610 may be bonded to at least a portion of the inner edge of the penetrating structure 410. By the above-mentioned structural design, the present invention can further realize the fixed connection of the cylindrical battery 200, the cooling plate 300 and the heating film 400 by using the first adhesive layer 610. In some embodiments, the first adhesive layer 610 may be adapted only to bond the cylindrical battery 200 to the cooling plate 300, i.e., the first adhesive layer 610 may not have an adhesive relationship with the heating film 400 (e.g., the inner edge of the penetrating structure 410), which is not limited in this embodiment.

As shown in FIG. 7, based on the structural design of the first adhesive layer 610 simultaneously bonding the cylindrical battery 200, the cooling plate 300 and the heating film 400, in an embodiment of the present invention, a second adhesive layer 620 may be provided between the cooling plate 300 and the heating film 400. The second adhesive layer 620 is suitable for bonding the cooling plate 300 and the heating film 400. On this basis, the bonding strength of the second adhesive layer 620 may be less than the bonding strength of the first adhesive layer 610. By the above-mentioned structural design, since the strength of the second adhesive layer 620 between the heating film 400 and the cooling plate 300 is weak, and when the heating film 400 is provided with the penetrating structure 410, the cylindrical battery 200, the cooling plate 300 and the heating film 400 are simultaneously bonded by the first adhesive layer 610, thereby increasing the fixed connection effect among the above-mentioned three, and also ensuring contact, thereby ensuring heat conduction. Meanwhile, since there is a difference in bonding strength between the first adhesive layer 610 and the second adhesive layer 620, when the cylindrical battery 200 and the cooling plate 300 are misaligned due to a vibration condition or a battery expansion, the second adhesive layer 620 having the weak bonding strength is firstly disconnected to contact the cooling plate 300 and the heating film 400, thereby preventing the heating film 400 from leaking out of the heating core due to an excessive shearing force generated on the heating film 400.

As shown in FIG. 5, in an embodiment of the present invention, the front projection pattern of the penetrating structure 410 may be circular on the above-mentioned reference plane. In some embodiments, the orthographic projection pattern of the penetrating structure 410 may have other shapes, such as a rectangular shape, etc., which is not limited to this embodiment.

It should be noted that the embodiments shown in FIG. 4 to FIG. 6 are exemplified with the penetrating structure 410 as a through-hole. It should be understood that in some embodiments, the penetrating structure 410 may also be a notch, one side of which is open to the edge of the heating film 400, without being limited to the above embodiments.

In an embodiment of the present invention, a core and a heating wire are disposed in the heating film 400, and the core and the heating wire are arranged around the penetrating structure 410.

In an embodiment of the present invention, the first end face 210 of the cylindrical battery 200 may be provided with an insulating layer. By the above-mentioned structural design, the present invention can ensure the insulating performance between the first end face 210 and the cooling plate 300 by the insulating layer.

Based on the structural design that the first end face 210 is provided with the insulating layer, in an embodiment of the present invention, the insulating layer may be an insulating sprayed layer. With the above-mentioned design, since the insulating sprayed layer has a greater surface roughness than that of other structural forms of insulating layers (such as insulating films), the present invention can further improve the bonding strength between the cooling plate 300 or the heating film 400 and the cylindrical battery 200 by using the design of the insulating sprayed layer.

As shown in FIG. 2, in an embodiment of the present invention, the second end face 220 of the cylindrical battery 200 may be connected to a conductive bar. By the above-mentioned structural design, the present invention can avoid the connection of the cooling plate 300 to the second end face 220 of the cylindrical battery 200 to cause interference between the same with the conductive bar 500.

As shown in FIG. 3 and FIG. 4, in an embodiment of the present invention, the second end face 220 of the cylindrical battery 200 may be provided with an explosion proof valve 230. By the above-mentioned structural design, the present invention can avoid the problem that the cooling plate 300 blocks a pressure relief injection valve when the explosion proof valve 230 is disposed on the first end face 210.

As shown in FIG. 2 and FIG. 3, in an embodiment of the present invention, the battery box 100 includes a bottom plate 110. The axial direction of the cylindrical battery 200 is parallel to the bottom plate 110, namely, the first direction X is parallel to the bottom plate 110. The first surface 310 of the cooling plate 300 is perpendicular to the bottom plate 110. In other words, the cylindrical batteries 200 are arranged in a "lying" manner with respect to the bottom plate 110, and the cooling plate 300 is arranged in an "upright" manner with respect to the bottom plate 110. On this basis, at least two cylindrical batteries 200 are arranged in a battery column 201 along a second direction Y, and the second direction Y is parallel to the bottom plate 110 and parallel to the first surface 310 of the cooling plate 300. The cooling plate 300 is provided with the battery columns 201 on both sides in the first direction X.

As shown in FIG. 2 and FIG. 3, based on the structural design that at least two cylindrical batteries 200 are arranged in a battery column 201 along a second direction Y, in an embodiment of the present invention, the battery pack proposed by the present invention may include at least two battery columns 201 which are arranged in an assembled battery 202 along a third direction Z, wherein the third direction Z is perpendicular to the bottom plate 110. By the above-mentioned structural design, the present invention can make full use of the inner space of the battery box 100 to arrange the cylindrical battery 200, which is beneficial to improve the energy density of the battery pack. In a common use scenario, the vibration of the battery pack in the third direction Z will be more frequent than the vibration in the first direction X and the second direction Y. When the vibration of the battery pack occurs in the third direction Z, the heat-conducting contact between the cylindrical battery 200 and the cooling plate 300 is more likely to fail. In this regard, the present invention adopts the solution that the heating film 400 is provided with the penetrating structure 410, which can increase the fixing strength between the cylindrical battery 200 adopting a "lying" design and the cooling plate 300 adopting an "upright" design, and improve the modality of the battery pack in the third direction Z.

As shown in FIG. 2 and FIG. 3, based on the structural design that at least two battery columns 201 are arranged in the assembled battery 202 along the third direction Z, in an embodiment of the present invention, the battery pack proposed by the present invention may include at least two assembled batteries 201 arranged along the first direction X. On this basis, the two assembled batteries 202 may be respectively located on both sides of the cooling plate 300 in the first direction X, that is, the two first surfaces 310 of the cooling plate 300 may respectively face towards the first end faces 210 of the cylindrical batteries 200 of the two assembled batteries 202 on both sides. By the above-mentioned structural design, the present invention can use the cooling plate 300 to achieve contact and heat exchange with the cylindrical batteries 200 of two adjacent assembled batteries 202, which is beneficial to reduce the number of parts and simplify the structural complexity.

In an embodiment of the present invention, the cylindrical battery 200 may be a lithium iron battery. For example, the cathode active material of the cylindrical battery 200 may be lithium iron phosphate.

Note that, as an example of the embodiment shown in FIG. 1, when cylindrical batteries 200 are disposed on both sides of the cooling plate 300 in the first direction X, the cooling plate 300, the cylindrical batteries 200 on both sides and other related structures may together constitute a battery module. The battery module may be disposed on a module bottom plate 1101 and disposed on the bottom plate 110 of the battery box via the module bottom plate 1101. At this time, with regard to the relative arrangement relationship between each structure and the bottom plate 110 in this description, it can be correspondingly understood as the relative arrangement relationship between each structure and the module bottom plate 1101. By the above-mentioned structural design, the present invention can improve the integration degree of the battery module, which is beneficial to improve the assembly efficiency. It should be understood that in some embodiments, the battery pack may not be provided with the module bottom plate 1101, and the battery module may be provided directly on the bottom plate 110 of the battery box 100.

It should be noted here that the battery pack shown in the accompanying drawings and described in this description are only a few examples of many types of battery packs that can employ the principles of the present invention. It should be clearly understood that the principles of the present invention are by no means limited to any detail or any component of the battery pack shown in the drawings or described in this description.

In summary, the battery pack proposed by the present invention adopts a design in which the first surface 310 of the heating film 400 faces towards the first end face 210 of the cylindrical battery 200. The first surface 310 of the cooling plate 300 is provided with a heating film 400 which is located between the cooling plate 300 and the first end face 210 and is provided with a penetrating structure 410 penetrating in the thickness direction. The front projection pattern of the first end face 210 at least partially overlaps with the front projection pattern of the penetrating structure 410 on a reference plane parallel to the first surface 310. The penetrating structure 410 is adapted for heat-conducting connection of the first end face 210 to the cooling plate 300. By the above-mentioned structural design, the present invention can reduce the influence of the heating film 400 on the heat transfer between the cooling plate 300 and the cylindrical battery 200 by using the penetrating structure 410, and can realize the direct heat transfer between the cooling plate 300 and the cylindrical battery 200 via the penetrating structure 410, so as to improve the heat transfer efficiency and optimize the thermal performance of the battery pack.

Exemplary embodiments of battery packs proposed by the present invention have been described and/or illustrated in detail above. However, the embodiments of the present invention are not limited to the particular embodiments described herein. Rather, the components and/or steps of each embodiment may be used independently and separately from the other components and/or steps described herein. Each component and/or each step of one embodiment may also be used in conjunction with other components and/or steps of other embodiments. In introducing elements/components/etc. described and/or illustrated herein, the terms "a," "an," and "the above-mentioned", etc. are used to indicate that one or more elements/components/etc. are present. The terms "comprising", "including", and "having" are used in an open-ended inclusive sense and mean that there may be additional elements/components/etc. in addition to the listed elements/components/etc. In addition, the terms "first" and "second" in the claims and the description are used only as labels, and are not intended to be numerical limitations on their obj ects.

Although the battery pack proposed by the present invention have been described in terms of different specific examples, those skilled in the art will recognize that modifications may be made to the implementation of the present invention within the spirit and scope of the claims.

## Claims

1. A battery pack, **characterized by** comprising:
a battery box (100);
a cylindrical battery (200) disposed in the battery box (100) and having an axial direction being a first direction (X); wherein the cylindrical battery (200) has a first end face (210), a second end face (220) and an outer circumferential face; the first end face (210) and the second end face (220) are arranged at intervals in the first direction (X); the outer circumferential face is connected between the first end face (210) and the second end face (220);
a cooling plate (300) having a first surface (310) facing towards the first end face (210); and
a heating film (400) disposed on the first surface (310) and located between the cooling plate (300) and the first end face (210); wherein the heating film (400) having a penetrating structure (410) penetrating in a thickness direction;
wherein a front projection pattern of the first end face (210) at least partially overlaps with a front projection pattern of the penetrating structure (410) on a reference plane parallel to the first surface (310); and the penetrating structure (410) is adapted for heat-conducting connection of the first end face (210) to the cooling plate (300).

2. The battery pack according to claim 1, **characterized in that** the heating film (400) is provided with at least two of the penetrating structures (410); and the front projection pattern of each of the penetrating structures (410) at least partially overlaps with a front projection pattern of a first end face (210) of only one of the cylindrical batteries (200) on the reference plane.

3. The battery pack according to claim 2, **characterized in that** a ratio of an area of the front projection pattern of the penetrating structure (410) to an area of the front projection pattern of the first end face (210) of the cylindrical battery (200) is 0.047-0.253.

4. The battery pack according to claim 3, **characterized in that** the area of the front projection pattern of the penetrating structure (410) is 78 mm²-420 mm².

5. The battery pack according to claim 3, **characterized in that** the geometric center of the front projection pattern of the first end face (210) coincides with the geometric center of the front projection pattern of the penetrating structure (410) on the reference plane.

6. The battery pack according to claim 2, **characterized in that** the distance (D) between two adjacent penetrating structures (410) is 20 mm-48 mm.

7. The battery pack according to claim 1, **characterized in that** the ratio of the area of the front projection pattern of the penetrating structure (410) to the area of a pattern surrounded by the outer contour of the front projection pattern of the heating film (400) on the reference plane is 5%-20%.

8. The battery pack according to any one of claims 1-7, **characterized by** further comprising a heat-conducting member disposed at least partially in the penetrating structure (410); wherein the first end face (210) is in heat-conducting connection with the cooling plate (300) via the heat-conducting member.

9. The battery pack according to claim 8, **characterized in that** the heat-conducting member comprises a first adhesive layer (610); and at least a portion of the first adhesive layer (610) is adapted to bond the cylindrical battery (200) to the cooling plate (300).

10. The battery pack according to claim 9, **characterized in that** at least a portion of the first adhesive layer (610) is adapted to simultaneously adhere to the cylindrical battery (200), the cooling plate (300), and the heating film (400).

11. The battery pack according to claim 10, **characterized in that** a second adhesive layer (620) is disposed between the cooling plate (300) and the heating film (400); and the second adhesive layer (620) is adapted to adhere to the cooling plate (300) and the heating film (400); wherein the bond strength of the second adhesive layer (620) is less than the bond strength of the first adhesive layer (610).

12. The battery pack according to any one of claims 1-7, **characterized in that** the battery box (100) comprises a bottom plate (110); wherein an axial direction of the cylindrical battery (200) is parallel to the bottom plate (110), and a first surface (310) of the cooling plate (300) is perpendicular to the bottom plate (110); wherein at least two of the cylindrical batteries (200) are arranged in a battery column (201) in a second direction (Y), and the second direction (Y) is parallel to the bottom plate (110) and parallel to the first surface (310); and the cooling plate (300) is provided with the battery column (201) on at least one side in the first direction (X).

13. The battery pack according to claim 12, **characterized in that** at least two of the battery columns (201) are arranged in an assembled battery (202) in a third direction (Z), and the third direction (Z) is perpendicular to the bottom plate (110).

## Amended claims

### Amended claims in accordance with Rule 137(2) EPC.

1. A battery pack, comprising:
a battery box (100);
a cylindrical battery (200) disposed in the battery box (100) and having an axial direction being a first direction (X); wherein the cylindrical battery (200) has a first end face (210), a second end face (220) and an outer circumferential face; the first end face (210) and the second end face (220) are arranged at intervals in the first direction (X); the outer circumferential face is connected between the first end face (210) and the second end face (220);
a cooling plate (300) having a first surface (310) facing towards the first end face (210); and
a heating film (400) disposed on the first surface (310) and located between the cooling plate (300) and the first end face (210); wherein **characterized in that** the heating film (400) has a penetrating structure (410) as a through-hole penetrating in a thickness direction of the heating film (400), and the thickness direction is the first direction (X);
wherein a front projection of the first end face (210) at least partially overlaps with a front projection of the penetrating structure (410) on the first surface (310); and the penetrating structure (410) is adapted for heat-conducting connection of the first end face (210) to the cooling plate (300),
wherein the heating film (400) is provided with at least two of the penetrating structures (410); and the front projection of each of the penetrating structures (410) at least partially overlaps with a front projection of a first end face (210) of only one of the cylindrical batteries (200) on the first surface (310).

2. The battery pack according to claim 1, **characterized in that** a ratio of the area of the front projection of each of the penetrating structures (410) to the area of the front projection of the first end face (210) of each of the cylindrical batteries (200) is 0.047-0.253.

3. The battery pack according to claim 2, **characterized in that** the area of the front projection of each of the penetrating structures (410) is 78 mm²-420 mm².

4. The battery pack according to claim 4, **characterized in that** the geometric center of the front projection of the first end face (210) coincides with the geometric center of the front projection of the penetrating structure (410) on the reference plane.

5. The battery pack according to claim 1, **characterized in that** the distance (D) between two adjacent penetrating structures (410) is 20 mm-48 mm.

6. The battery pack according to claim 1, **characterized in that** the ratio of the area of the front projection of the penetrating structures (410) to the area of a pattern surrounded by the outer contour of the front projection of the heating film (400) on the reference plane is 5%-20%.

7. The battery pack according to any one of claims 1-6, **characterized by** further comprising a heat-conducting member disposed at least partially in the penetrating structure (410); wherein the first end face (210) is in heat-conducting connection with the cooling plate (300) via the heat-conducting member.

8. The battery pack according to claim 7, **characterized in that** the heat-conducting member comprises a first adhesive layer (610); and at least a portion of the first adhesive layer (610) is adapted to bond the cylindrical battery (200) to the cooling plate (300).

9. The battery pack according to claim 8, **characterized in that** at least a portion of the first adhesive layer (610) is adapted to simultaneously adhere to the cylindrical battery (200), the cooling plate (300), and the heating film (400).

10. The battery pack according to claim 9, **characterized in that** a second adhesive layer (620) is disposed between the cooling plate (300) and the heating film (400); and the second adhesive layer (620) is adapted to adhere to the cooling plate (300) and the heating film (400); wherein the bond strength of the second adhesive layer (620) is less than the bond strength of the first adhesive layer (610).

11. The battery pack according to any one of claims 1-6, **characterized in that** the battery box (100) comprises a bottom plate (110); wherein an axial direction of the cylindrical battery (200) is parallel to the bottom plate (110), and a first surface (310) of the cooling plate (300) is perpendicular to the bottom plate (110); wherein at least two of the cylindrical batteries (200) are arranged in a battery column (201) in a second direction (Y), and the second direction (Y) is parallel to the bottom plate (110) and parallel to the first surface (310); and the cooling plate (300) is provided with the battery column (201) on at least one side in the first direction (X).

12. The battery pack according to claim 11, **characterized in that** at least two of the battery columns (201) are arranged in an assembled battery (202) in a third direction (Z), and the third direction (Z) is perpendicular to the bottom plate (110).
